Europäisches Patentamt

European Patent Office

Office européen des brevets

(11) Publication number : **0 536 963 A1**

# (12) EUROPEAN PATENT APPLICATION

(21) Application number : **92309042.7**

(22) Date of filing : **02.10.92**

(51) Int. Cl.$^5$ : **C02F 11/18, C02F 11/12**

(30) Priority : **11.10.91 US 773324**

(43) Date of publication of application :
**14.04.93 Bulletin 93/15**

(84) Designated Contracting States :
**AT BE CH DE DK ES FR GB GR IT LI LU NL SE**

(71) Applicant : **PORI INTERNATIONAL, INC.**
**Suite 310, 1105 North Point Boulevard**
**Baltimore, Maryland 21224 (US)**

(72) Inventor : **Kovacs, Geza Louis**
**4604 North Charles Street**
**Baltimore, Maryland 21210 (US)**

(74) Representative : **Wilkinson, Stephen John et al**
**Stevens, Hewlett & Perkins 1 St. Augustine's**
**Place**
**Bristol BS1 4UD (GB)**

(54) **Process for enhancing the dewaterability of waste sludge from microbiological digestion.**

(57)    The present invention is concerned with a process for enhancing the dewaterability of a waste sludge having a substantial content of water-retaining cellular structure arising from microbiological action and having a solids content of seven to fifteen percent by weight. The pH of the sludge is adjusted to 4.0 or less, the sludge is subjected to heat treatment to significantly enhance its filerability, the pH is again adjusted to near neutral, the sludge is subjected to a second heat treatment step, and the sludge is filtered to a final solids content in excess of about fifty-five percent by weight.

EP 0 536 963 A1

FIELD OF THE INVENTION

The present invention is concerned with a process for rendering fairly high solids waste sludges with substantial contents of water retaining cellular structures arising from microbiological action, amenable to further mechanical dewatering.

BACKGROUND OF THE INVENTION

The treatment of aqueous waste streams having a significant content of organic matter has been and continues to be a matter of substantial technological interest. These waste streams may be general sewage or they may be from various industrial operations such as food processing, oil refining or paper production.

A very old but still valid approach to this problem is to reduce the dissolved and colloidally suspended organic content of the waste stream through microbiological action. This typically involves digestion of this organic matter by aerobic fermentation, anaerobic fermentation or both. Such microbiological activity generates a gelatinous material commonly referred to as activated sludge. It has a high tightly bound water content.

The disposal of such sludges is also a matter of technological concern. The two primary goals have been to terminate the biological activity and to reduce the water content. Both have been addressed by either the treatment of the sludge with lime or calcium hydroxide, or the heat treatment of the sludge with or without the addition of an oxygen bearing gas or an oxidizing agent. Neither approach has been entirely satisfactory.

The lime treatment is expensive and actually significantly increases the amount of sludge with which one must deal. A fairly high loading of lime, typically between about 150 and 550 pounds per ton of dry sludge solids, is required for dewatering enhancement. The expense of such a treatment involves not only the costs of the lime itself but also the substantial labor costs n handling such a large quantity of additive. Furthermore, effective dewatering also requires the addition of an inorganic metal salt, typically ferric chloride, at loadings commonly between about 40 and 125 pounds per ton of dry sludge solids. Most of the lime and all of the ferric chloride usually end up as additional solids in the filter cake, thus adding to the amount of solid material of which one must dispose.

In addition, some sludges require even higher loadings of lime for stabilization. An EPA case study has reported a need for as much as 1000 pounds per ton of dry sludge solids to reliably terminate biological activity.

On the other hand, heat treatment has apparently uniformly involved the heating of rather dilute feed streams with typical solids contents between about 3 and 10 weight percent. This heat treatment has almost universally involved the use of some type of heat exchanger to recover some of the heat energy expended in raising the temperature of the very high water content feed stream. Scaling problems are commonly encountered in passing these dilute sludges through such heat exchangers resulting in a frequent need to acid wash the heat exchanger.

Furthermore, two separate operations are usually required to dewater the heat treated sludge. Generally, the heat treated material is fed to a decanter, clarifier or settling tank and then the underflow from this operation is fed to a rotary vacuum filter or a recessed chamber pressure filter.

There are disclosures of feeding a fairly dilute heat treated material directly to a centrifuge for final dewatering. However, such procedures require the addition of a substantial quantity of flocculating polymer.

SUMMARY OF THE INVENTION

The present invention is concerned with a process of enhancing the dewaterability of waste sludge with a substantial content of a water-retaining cellular structure arising from microbiological action by heat treating the sludge. It is further concerned with an efficient and convenient procedure for killing the pathogens and odor generating microorganisms present in the sludge by heating a concentrated waste sludge to temperatures higher than can be tolerated by such organism.

It is preferred to use mild temperatures between 260° and 3900 F. It is further preferred to conduct the heat treatment without the addition of either an oxygen bearing gas or an oxidizing agent. In a particularly preferred embodiment the sludge is acidified or alkalized before the heat treatment and then at least partially neutralized before the heat treatment is ended. The neutralization is optional, but beneficial.

BRIEF DESCRIPTION OF THE DRAWINGS

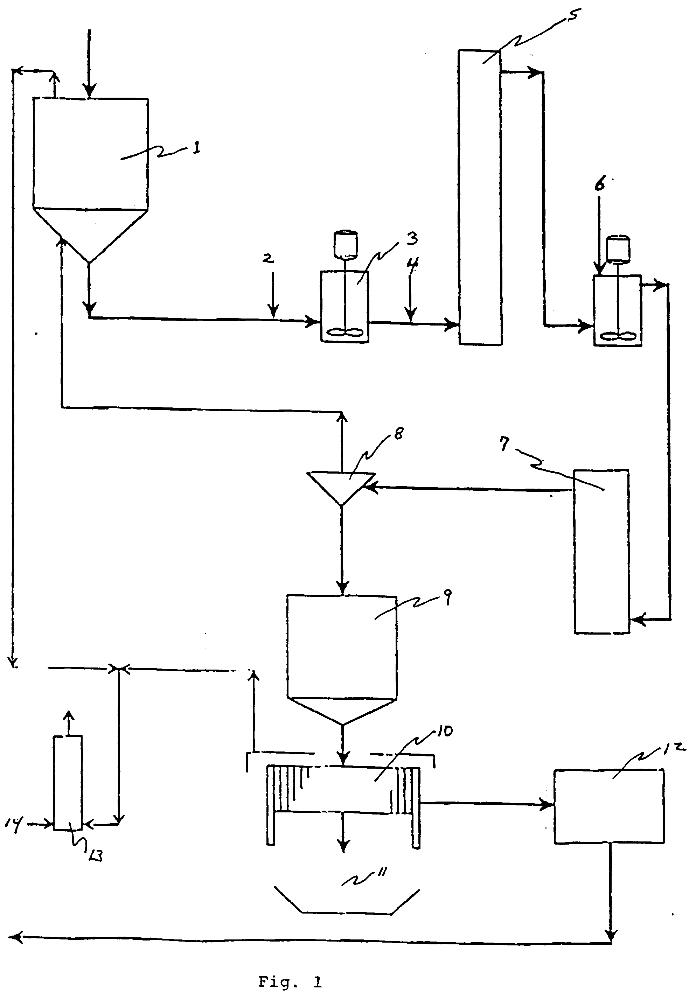

Fig. 1 is a schematic view of one embodiment of the invention wherein the process of the invention can be conducted substantially continuously.

DETAILED DESCRIPTION OF THE INVENTION

The further dewatering of concentrated waste sludges which have a substantial content of organic water binding material is facilitated by heat treating them. In general these waste sludges can have solids contents of about 15 weight percent or greater, preferably between about 20 and 30 weight percent. However, there is no minimum amount of solids content that a waste sludge must have in order to be suitable for treatment in accordance with the invention, so long as at least some solids are present. The amount of solids present will be dictated by the extent to which the concentrated waste sludges have been dewatered prior to being subjected to the processes of the present invention. The amount of solids contained in a waste sludge is typically determined by the process and equipment employed to generate the sludge. In general, waste sludges are concentrated by skilled workers to a solids content of 15% or greater. While solids contents of 15% are typical, sludges with solids contents of 10%, or even as low as from about 7% to about 9% are possible.

The organic water binding material is typically of a cellular structure which has been built up as the result of the microbiological activity involved in the activated sludge process, i.e., the process of reducing the biological oxygen demand (BOD) and chemical oxygen demand (COD) of an aqueous waste stream by aerobic digestion, anaerobic digestion or both. This aqueous waste stream may be from a multitude of sources including but not limited to municipal sewerage and industrial operations such as paper making, food processing, oil refining and organic chemical synthesis. Typical organic chemical syntheses include dyestuff manufacture and conversion of petroleum feedstocks to chemical intermediates. In a preferred process the concentrated sludge has been dewatered to the point that significant further water removal cannot be effected with a recessed chamber membrane filter press with a 100 psi filter pressure.

The concentrated waste sludge may have been obtained through the use of polyelectrolyte flocculants. These flocculants are typically high molecular weight polyacrylamides with various anionic or cationic pendant groups obtained by derivitization or co-polymerization. They are commonly used at loadings between about 10 and 15 pounds per ton of dry sludge solids. For many common waste sludges there is no practical way to obtain solids concentrations of unheated-treated waste sludges above about 6 weight percent without the use of such flocculants. However, it is believed that the presence of such flocculants in the concentrated waste sludges treated in the present procedure neither enhances nor inhibits the enhanced dewaterability obtained. Such flocculants simply provide a convenient route to the starting material of the present process.

The heat treatment should be sufficient to at least partially break down the cellular structure which binds the water content. It is believed that the heat treatment at least partially effects this breakdown by denaturing the proteins of this cellular structure. It is preferred to use temperatures in excess of about 260°F, preferably between about 270°F and 390°F and most preferably between about 280°F and 366°F. At too low a temperature excessive times are required to obtain a significant improvement in dewaterability. At a sufficiently low temperature no improvement is observed over a reasonable treatment period. On the other hand, excessively high temperatures may cause an undesirable degree of redissolution of materials which increase the COD and BOD of the effluent from the dewatering process. Furthermore, the improvement in dewaterability by heat treatment beyond a certain point yields only minimal improvements in dewaterability and is unnecessarily expensive in terms of both thermal energy and, if excessively high temperatures are involved, capital equipment and maintenance costs to deal with the high pressures needed to keep water liquid at such temperatures. In this regard, in the present invention it is preferred to operate at a pressure of 200 psig or less, more preferably at 150 psig or less.

The effect of heat treatment may be substantially accelerated by adjusting the pH of the concentrated waste sludge to a strongly acidic or alkaline value. It is particularly preferred to adjust the pH to a value of about 3 or more points from neutral. It is especially preferred to operate on the acidic side during heat treatment and even more preferred to operate at pH values about 3 or less. Operating on the alkaline side typically results in the generation of substantial amounts of ammonia and may require the use of a completely closed system to avoid the loss of this ammonia and a consequent drop in pH. Furthermore, this ammonia generation tends to remove nitrogen values from the ultimately recovered cake and poses an additional disposal problem. Either a gas waste stream is generated or dissolved ammonium is added to the effluent when the treated sludge is neutralized.

It is also preferred to substantially neutralize an acidified or alkalized concentrated sludge before mechanically dewatering it. It is particularly preferred to bring the pH value within about three points, more preferably two points, or less, of neutral. This neutralization step results in the precipitation of both organic materials and metal salts which are soluble at the more extreme pH values. However, neutralization is optional and processes of the invention can be employed without a neutralization step.

Since the effluent from the dewatering of the concentrated waste sludge is typically recycled to the initial treatment plant, the organic materials dissolved in the effluent will lead to the generation of more sludge. Typically each pound of BOD will generate 0.6 pounds of activated sludge. On the other hand the metals content of the primary waste stream being processed through the initial treatment plant will continue to increase as it is mixed with this recycle effluent if this effluent has an increased metals content.

It is further preferred to utilize a basic calcium compound to neutralize the acidified concentrated waste sludge. Calcium is a preferred cation because of its limited water solubility and because basic calcium compounds are relatively inexpensive. A particularly advantageous neutralizing agent is calcium hydroxide which is readily available as slaked lime or can be readily obtained by slurrying quick lime in water.

In other preferred embodiments cement kiln dust may be employed as the alkaline agent. Cement kiln dust is readily available as a by-product of, e.g., portland cement production.

It is advantageous to extend the heat treatment for some period after the neutralization. If the heat treatment is discontinued before the neutralization is complete, a significant portion of the enhanced dewaterability of the concentrated waste sludge may be lost. It is particularly preferred to heat treat the neutralized concentrated sludge for at least about ten minutes.

The heat treatment may be effected using any heat transfer means which can reliably and effectively raise the temperature of the concentrated waste sludge into the required range while maintaining it under pressure. It is preferred to avoid heat transfer means which involve the concentrated waste sludge contacting a solid surface hotter than itself. This material typically displays a strong tendency to deposit scale on such surfaces thereby substantially inhibiting further heat transfer, sometimes to the extent that the coefficient of thermal transfer becomes essentially zero. It is further preferred that the heating means involve means for agitating the concentrated waste sludge, because such sludges have a poor heat transfer coefficient (one EPA study reports an inverse relationship between this coefficient and the sludge solids content with a dramatic increase in the rate of diminution of this coefficient at solids contents of 6 percent or greater). It is particularly preferred to effect the heat transfer by contacting the concentrated waste sludge with a hot fluid and it is especially preferred to use pressurized steam. This steam can be injected into the air space immediately adjacent to the sludge or preferably it can be injected into the body of the sludge. Both the high viscosity and the low coefficient of heat transfer to these sludges will make the use of conventional heat exchangers very impractical, if not impossible.

The concentrated waste sludge should be heat treated under sufficient pressure to keep its water content substantially liquid. Otherwise it becomes very difficult if not impossible to raise the temperature above the boiling point of the water. In going from the liquid to the gaseous state water absorbs a tremendous amount of heat, thus making it extremely uneconomical to attempt to dewater simply by boiling off the water.

The length of time at the heat treatment temperature needed to effect a substantial enhancement of dewaterability of a given concentrated waste sludge depends primarily on the temperature of the treatment and the pH at which the treatment was effected. Generally for most sludges the optimum enhancement is achieved in between about 4 and 5 hours and this can be shortened to about 40 minutes or less by conducting the heat treatment at high or low pH values. However, significant benefit can be obtained in about two hours, or fifteen minutes with simultaneous pH adjustment.

There appears to be a linear relationship between the pH of the concentrated waste sludge and the log of the time necessary to obtain irreversible enhanced dewaterability at pH values less than neutral. The enhanced dewaterability is considered irreversible when it is not significantly degraded by subjecting treated material to either shear or aging before filtration. It is believed that a family of curves can be readily developed, one curve for each treatment temperature in the appropriate range, relating the log of the treatment time to develop irreversibility to the pH of the material being treated. Such a curve for treatment with 100 psig steam (338°F) has been developed. This is defined by the equation $y = bm^x$ wherein y is the treatment time to irreversibility in minutes, x is the pH of the concentrated waste sludge, b is 9.986 and m is 1.894. This equation fits the measured data with a correlation coefficient of 0.993.

The heat treatment acceleration obtained by the use of extreme pH values is of primary interest for continuous processing of the concentrated waste sludge. Many waste treatment plants operate at volumes such that the processing of waste sludge is conveniently done on a batch basis. In such situations the economic balance between the cost of a longer heat treatment and the additional cost of acidification or alkalization followed by neutralization may dictate whether the acceleration procedure is desirable. As the throughput required of the sludge treatment facility increases, a bias toward acceleration develops; the same throughput can be obtained in a smaller and therefore less expensive heat treatment system with a shorter residence time. As the heat treatment time increases the batch size for each cycle must be that much larger to obtain the same throughput.

In addition to conducting the process of the invention on a batch basis, the invention can also be practiced on a continuous basis. Fig. I schematically represents a system in which the invention can be practiced on a continuous basis. In such a system, sludge is introduced through a sludge hopper or closed storage tank 1. A positive displacement pump (not shown) can be used to feed the sludge. Acid is introduced to the sludge through a mixing tee at 2 and mixed with the sludge in acid mixer 3. Steam is introduced to raise the temperature, downstream of the acid mixer, at 4. The acid is allowed to react with the sludge and acidify the sludge in the acid mixer 3 and the reaction is completed in acid reactor 5. In preferred embodiments, the pH can be adjusted to a value of 3 with sulfuric acid and the process can be operated at 100 PSIG at a temperature of 330°F (sludge temperature). Lime, conveniently in the form of a solution, suspension or slurry is introduced via lime mixer 6. Most of the neutralization takes place in lime mixer 6. Neutralization of the acidified sludge is completed in the neutral reactor 7. Both the acid reactor and the neutralization reactor are conveniently plug flow reactors. The residence time in the acid reactor is preferably about 1 hour and in the neutral reactor, preferably 15 minutes. The portion of the system through the neutral reactor is pressurized, because steam is introduced under pressure through the mixing tee. The pressure is released through pressure letdowns (not shown) and then fed to a separator 8. At the separator, steam is recycled to the sludge storage tank or hopper 1. Sludge is fed to a filter feed tank 9. Cooling water may be added to the sludge at this point (supply not shown). The cooled sludge is then fed to a filter 10. The filter is preferably a recessed plate diaphragm filter press (also referred to herein as a recessed chamber membrane pressure filter). The filtration operation results in filter cakes which are deposited at zone 11. Filtrate is fed to a filtrate holding tank 12 where it is held and subsequently recycled to, e.g., the waste water treatment system which originally produced the sludge. If desired for odor control, off gases can be collected and treated in thermal oxider 13 which is fed with combustion gas from source 14.

As with the batch operation, the continuous operation is carried out on fully conventional equipment which is readily available to those of ordinary skill in the art. Suitable substitutions can be readily made. For instance, a recessed chamber membrane filter press can be used, or a suitable substitute can be employed.

The enhancement in dewaterability can be conveniently evaluated in terms of filtration time and cake solids. A decrease in filtration time and an increase in solids content both reflect an enhancement in dewaterability. It is preferred to use treatment conditions such that the filtration time is less than about two hours, preferably less than about one hour and even more preferably less than about thirty minutes. In fact filtration times of less than about five minutes and even less than two minutes can be readily obtained. Such rapid filtration times are a good indicator that optimum dewaterability has been approached, even if the capacity of commercially available pumps limit the ability to take full advantage of them.

The heat treatment can readily yield concentrated waste sludges which can be readily dewatered to solids contents in excess of about 30 weight percent. It is preferred to use conditions which yield cake solids in excess of about 45 weight percent, more preferably in excess of about 55 weight percent, most preferably in excess of about 60 weight percent.

The enhanced dewaterability of the concentrated waste sludge can be further evaluated in terms of its aging behavior and sensitivity to shear. A sludge which has not been optimally conditioned will display a significant increase in filtration time and a significant decrease in cake solids upon aging a significant period of time after heat treatment. A typical evaluation period is overnight for about 16 hours.

Furthermore, subjecting a concentrated waste sludge which has not been optimally conditioned to substantial shear will cause it to lose a substantial degree of its enhanced dewaterability. A convenient evaluation technique is to vigorously stir a conditioned sludge at 140°F for about thirty minutes.

It is especially preferred to sufficiently condition the concentrated waste sludge such that it does not display significant sensitivity to either aging or significant shear. For the purposes of this invention, the enhanced dewaterability of such a treated concentrated waste sludge is characterized as irreversible.

The filtration time and cake solids obtainable may be conveniently evaluated using a recessed chamber membrane pressure filter. In the work reported in this specification (unless otherwise indicated) the filtration was done at a filtration pressure of 100 psi; and a membrane squeeze pressure of 175 psi. The concentrated waste sludge was filtered at a temperature of 140°F. The filter cloth was a 43 X 80 9 oz/yd$^2$ polypropylene monofilament sateen weave cloth with a calendared finish, an air porosity between about 60 and 100 cfm and a thread count of 75 x 32. However, the precise nature of the filter cloth was not considered critical so as it did not blind. It was believed that the filtration was basically effected by the cake as it built up on the cloth. The actual device used was a half of a filter set known as a bomb filter and commonly used for laboratory evaluation.

The recessed chamber membrane pressure filter is well known to those skilled in the art. An extensive review of its use in dewatering is contained in the paper "Membrane Press Sludge Dewatering" presented by Dr. Ernest Mayer at the Second Annual Meeting of the American Filtration Society in Pittsburgh, PA in March of 1989. Its initial development for dewatering washed pigment cake is reported in U.S. Patent No. 3,289,845, incorporated by reference as though set forth in full herein. Filters of this type are available from a number of suppliers including Klinkau GmbH of Marktoberdorf-Leuterschach, West Germany and Lenser America of Lakewood, New Jersey. This type of filter is basically a recessed chamber plate filter which contains an inflatable membrane for squeezing the filter cake after the initial pressure filtration has been essentially completed.

Although the dewaterability of the conditioned sludge was evaluated on a recessed chamber pressure membrane filter, it can be practically dewatered in a wide variety of mechanical dewatering devices including centrifuges and rotary vacuum filters. The selection of a suitable device can be readily made by those of ordinary skill in the art. Of course, the results obtained will depend somewhat on the nature of the dewatering device. Currently the recessed chamber membrane pressure filters are the most preferred devices.

The following examples more fully illustrate specific embodiments of the invention.

EXAMPLE 1

Enhancing the Dewaterability of Concentrated Primary and Secondary Municipal Sewerage Sludge by Heat Treatment

A concentrated waste sludge, which was obtained by filtration on a recessed chamber plate filter of a mixture of the primary and secondary sludge generated in a municipal waste treatment plant which utilizes aerobic digestion, was heat treated for various times to improve its dewaterability. The concentrate was obtained by adding between 10 and 15 pounds per dry ton of solids of a polyacrylamide-based polyelectrolyte flocculent to the sludge and then filtering it to a solids content of about 29 weight percent. This concentrated waste sludge had a pH of about 5.2 and an ash content of about 22.7 weight percent.

Four hundred gram samples of this concentrated waste sludge were heat treated in an autoclave at a pressure of 100 psig using 100 psig steam for varying periods of time. The steam was injected directly into the body of the sludge for between four and six minutes and thereafter it was provided to the air space around the sample. Temperature profiles had established that this direct injection was sufficient to heat the sample to obtain a temperature of about 320°F. The treatment time was measured from completion of this direct injection to steam termination. It took some portion of this treatment, which varied from run to run, for the temperature of the sludge to equilibrate to the 338°F temperature of 100 psig steam. The heat treatment was discontinued by gradually releasing the pressure and this cool-down period was not included in the treatment time.

The dewaterability was tested by mixing a fifty gram sample with 50 mililiters of water and feeding this mixture to a test filtration apparatus known as a bomb filter which consisted of one-half of a recessed chamber membrane pressure filter set and which had a capacity of approximately 250 mililiters. A filtration pressure of 100 psi was used followed by a squeeze pressure which was gradually increased to 175 psi. The sludge was at a temperature of about 140° F during the filtration.

The evaluation criteria were filtration time until gas could be observed passing through the filter (the filtration was driven with pressurized nitrogen) the percent solids achieved after squeezing, the effect of overnight aging and the effect of shear (applied by thirty minutes mixing with a household hand cake batter mixer). The thickness of the filter cake after squeezing was also observed. The results are reported in Table 1.

EP 0 536 963 A1

<u>TABLE 1</u>

**Straight Heat Treatment of Concentrated Waste
Sludge From Aerobic Digestion of Municipal Sewerage**

| Treatment Time (in hours) | As Treated Filtration | | Sheared Filtration | | | | Aged Filtration | | Cake Thickness (in mm) |
|---|---|---|---|---|---|---|---|---|---|
| | Filtration Time (in minutes) | Cake Solids (in %) | Filtration Thickmess (in mm) | Cake Time (in minutes) | Cake Solids (in %) | (in mm) | Filtration Time (in minutes) | Cake Solids (in %) | |
| 2 | 9 | 53.6 | 9 | not filterable | | | 24 | 52.8 | 9 |
| 4 | 2 | 63.2 | 7 | 15 | 60 | 7 | 8 3/4 | 63.8 | 7 |
| 5 | 1 | 65.4 | 6.5 | 16 | 65.4 | 6 | 1 1/8 | 66.6 | 6 |

The cakes which are obtained did not initially exhibit or develop objectionable odors, even after prolonged storage periods. This was taken as an indication that the heat treatment had inactivated or killed any microorganisms present in the concentrated waste sludge.

Example 2

Acid Acceleration of the Heat Treatment of Primary and Secondary Municipal Sewerage Sludge

Four hundred gram samples of the concentrated waste sludge described in Example 1 were acidified to a pH value of about 2 by stirring in an appropriate amount of concentrated sulfuric acid, heat treated for varying periods of time using 100 psig steam in the manner described in Example 1 and then evaluated as described in Example 1. The results are reported in Table 2.

TABLE 2

| Dewaterability of Acidified and Heat Treated Concentrated Waste Sludge from Aerobic Digestion of Municipal Sludge | | | | | | |
|---|---|---|---|---|---|---|
| Treatment Time (in minutes) | As Treated Filtration | | | Sheared Filtration | | |
| | Filtration Time (in minutes) | Cake Solids (in %) | Cake Thickness (in mm) | Filtration Time (in minutes) | Cake Solids in % | Cake Thickness (in mm) |
| 20 | 37 | 44.4 | 8 | Not filterable | | |
| 30 | 11 | 52.3 | 8 | Not filterable | | |
| 40 | 11 | 65.0 | 6.5 | 5 | 62.4 | |

As in Example 1, the cakes which were obtained were free of objectionable odors and did not develop such odors indicating a termination of biological activity.

Example 3

Dewaterability of Heat Treated Acidified and Neutralized Concentrated Municipal Sewerage from Anaerobic Digestion

A concentrated waste sludge, which was obtained by centrifuging a municipal sewerage sludge from an anaerobic digestion, was acidified, heat treated for about one hour, neutralized, further heat treated for about fifteen minutes and then its dewaterability was evaluated in the manner similar to that described in Example 1. The initial sludge was modified by the addition of between about 10 and 15 pounds per dry ton of sludge solids of a polymer flocculent of the type described in Example 1 and then it was centrifuged to a solids content of about 20.7 weight percent which had an ash content of 42.3 weight percent. This sludge had a pH value of about 8.45.

Six hundred gram samples were acidified to a pH value of about 2 by stirring in an appropriate amount of concentrated sulfuric acid. They were then heat treated in an autoclave maintained at 100 psig by the injection of 100 psig steam into the airspace around the specimen for about one hour. Temperature profiles indicated that it took approximately forty minutes for each specimen to reach a temperature in excess of about 310°F and that the specimen did not quite reach the 338°F temperature of the 100 psig steam.

Each specimen was then neutralized by stirring in the appropriate amount of lime. In one case, the pH was taken to a value of 6.7 and in the other case to a value of 9.0.

The neutralized samples were then heat treated for about fifteen minutes by injecting 100 psig steam into the free airspace of an autoclave with a steam trap valve set at 100 psig. Temperature profiles indicated that the specimens reached a temperature between about 245°F and 270°F at the conclusion of the fifteen minute treatment.

The dewaterability of the concentrated waste sludge specimens was evaluated after treatment, after being mixed for thirty minutes with an overhead agitator and after aging overnight. In each case, a seventy five gram specimen was fed to the apparatus described in Example I (140°F filtration temperature, 100 psi filtration pressure and 175 psi squeeze pressure). All six runs (two neutralization pH values each subjected to three post treatment conditions) gave approximately the same filtration time of between 2 and 3 minutes and cake solids of around 64 percent. The ash content of the solids was between about 55 and 65 weight percent.

As in Examples 1 and 2, the cakes obtained did not display and did not later develop any objectionable odors thus evidencing an absence of biological activity.

Example 4

Enhancing the Dewaterability of Concentrated Municipal Sewerage Sludge from Anaerobic Digestion by Acidification and Heat Treatment

A concentrated waste sludge, which was obtained in the manner as in Example 3 and which had a solids content of 20.7 weight percent with an ash content of 38.3 weight percent, was acidified, heat treated for one hour, neutralized, heat treated for 15 minutes and evaluated in the manner described in Example 3. The acidification was effected by stirring in an appropriate amount of concentrated sulfuric acid to yield a pH value of about 2. The heat treatment was effected by injecting 100 psig steam into the airspace of an autoclave with a steam trap valve set at 100 psig. The neutralization was effected by stirring in an appropriate amount of lime with a household hand cake batter mixer to give a pH value of about 7.7 (the cake batter mixer was used to test the shear sensitivity of the treated material).

The treated material filtered in about two minutes and yielded a final squeezed cake of 10.5 mm thickness with a solids content of about 66 weight percent having an ash content of about 54 weight percent. The filter feed had a suspended solids content of about I1 weight percent. Essentially, the same results were obtained from material which was aged overnight.

As in Examples I, 2 and 3, the cakes obtained did not display or develop any objectionable odors thus evidencing an absence of biological activity.

However, when the same material was only heat treated for approximately 30 minutes, the acidified material could not be filtered at a filtration pressure of 110 psi. A temperature profile indicated that a maximum temperature of 288°F was reached at the end of this thirty minute treatment. Only about 20ml of effluent was obtained after seven minutes of filtration and the run was terminated.

Example 5

Enhancing the Dewaterability of Concentrated Primary and Secondary Municipal Sewerage Sludge from Aerobic Digestion by Acidification and Heat Treatment and Determining the Result of Residual CHemical Distribution

A concentrated waste sludge, which was obtained in the same manner as Example 1 and which had a solids content of about 20.9 weight percent having an ash content of 18.5 weight percent, was acidified, heat treated for either 3/4 of an hour or one hour, neutralized, heat treated for 15 minutes and evaluated as in the manner described in Example 1. The acidification was effected by stirring in an appropriate amount of concentrated sulfuric acid to yield a pH value of about 2. The heat treatment was effected by injecting 90 psig (about 331°F) steam into the airspace of an autoclave with a steam trap valve set at 90 psig. The neutralization was effected by stirring in an appropriate amount of lime to give a pH value of about 5.5. The results are reported in Table 3.

EP 0 536 963 A1

## TABLE 3

Dewaterability of Acidified Concentrated Waste Sludge
from Aerobic Digestion of Municipal Sewerage

| Treatment Time (in minutes) | As Treated Sample | | | Sample Aged Overnight | | |
|---|---|---|---|---|---|---|
| | Filtration Time (in minutes) | Cake Solids (in %) | Cake Thickness (in mm) | Filtration Time (in minutes) | Cake Solids (in %) | Cake Thickness (in mm) |
| 45 | 6.5 (1.6)[1] | 44.8 (53.3) | 14 (12) | 20.5 (12.7) | 43.6 (48.6) | 13 (12) |
| 60 | 1 (1.3) | 57.7 (63.8) | 9.5 (9) | --- (2.5) | --- (61.1) | (9) |

[1] Values in parenthesis are for filtration at 165°F and a squeeze pressure of 225 psi as opposed to the 140°F filtration temperature and 175 psi squeeze pressure of the preceding claims.

Table 3 illustrates the development of optimum properties as the time at temperature is extended. A substantial improvement in dewaterability is already observed after the shorter treatment period but further improvement is clearly obtainable both in terms of percent solids and in terms of resistance to aging. The latter is clearly important in the event that it is not possible to immediately dewater the treated material.

The filter cakes obtained had ash contents, based on dry solids, of about 33 weight percent and the filter feed had a suspended solids content between about 8 and 9 weight percent.

A detailed chemical analysis of the initial concentrated waste sludge and the filter cake and the filtrate of the forty five minute treatment followed by the 140°F filtration with the 175 psi squeeze is recorded in Table 4.

## TABLE 4

A Chemical Analysis of a Concentrate Waste Sludge and the Dewatering Products obtained by Filtration at 140°F After Heat Treatment with Acidification and Neutralization

| | Amount of Material in Concentrated Waste | % of Material Accounted for | % of Material in the Cake | % of Material in the Filtrate 2/ |
|---|---|---|---|---|
| NH$_3$ as N | 0.33 wt % | 50.5 | 8.7 | 41.8 |
| Total Kjeldahl N as N | 1.3 wt % | 65.6 | 37.9 | 27.7 |
| Phosphate Total as P | 0.4 wt % | 82.9 | 80.0 | 2.9 |
| Total Aluminum | 0.23 wt % | 98.6 | 97.1 | 1.4 |
| Total Cadmium | 1.8 ppm | 80.2 | 80.2 | - |
| Total Chromium | 50 ppm | 94.3 | 91.3 | 3 |
| Total Copper | 67 ppm | 98.0 | 97.0 | 1.0 |
| Total Iron | 0.22 wt % | 88.6 | 75.8 | 12.9 |
| Total Lead | 21 ppm | 94.4 | 90.5 | 3.9 |
| Total Nickel | 7 ppm | 47.6 | 43.3 | 4.3 |
| Total Zinc | 250 ppm | 44.1 | 42.7 | 1.4 |

2/ The filtrate also has a C.O.D. of 28000 mg/l.

EXAMPLE 6

Dewaterability of Acidified and Neutralized Heat Treated Concentrated Primary and Secondary Municipal Sewerage Sludge

A concentrated waste sludge, which was obtained by filtration on a belt filter of a mixture of the primary and secondary sludge generated in a municipal waste treatment plant which utilizes aerobic digestion, was acidified, heat treated, neutralized, and further heat treated to improve its dewaterability. The concentrate was obtained by adding between 10 and 15 pounds per dry ton of solids of a polyacrylamide based polyelectrolyte flocculent to the sludge and then filtering it to a solids content of about 24.5 weight percent. This concentrated waste sludge had an ash content of about 27.4 weight percent.

A six hundred gram sample of this concentrated waste sludge was acidified to a pH value of about 2 by stirring in an appropriate amount of concentrated sulfuric acid.

It was then heat treated in an autoclave at a pressure of 100 psig using steam for one hour. The steam was injected into the air space around the sample. A temperature profile indicated that a temperature of 330°F was reached after about forty minutes.

The sample was then neutralized to a pH value of about 5.9 by stirring it with an appropriate quantity of lime slurried in water.

The neutralized sample was heat treated for fifteen minutes with 100 psig steam in an autoclave with a steam trap valve set at 100 psig. A temperature profile showed the sample reaching a temperature of about 260°F at the conclusion of the treatment period.

The dewaterability was tested by mixing a fifty gram sample with 50 mililiters of water and feeding this mixture to a test filtration apparatus known as a bomb filter which consisted of one half of a recessed chamber membrane pressure filter set and which had a capacity of approximately 250 mililiters. A filtration pressure of 100 psi was used followed by a squeeze pressure which was gradually increased to 175 psi. The sludge was at a temperature of about 140°F during the filtration.

The filtration was completed in about 2 minutes and a solids content of about 64.6 weight percent was obtained after squeezing. The filter cake had a half chamber thickness (as described in Example 1 the test apparatus was one half of a filter set) of l1 mm and an ash content of about 36.7 weight percent.

This filter cake did not exhibit an objectionable odor either as filtered or after aging at room temperature for an extended period. This indicated that all biological activity had been terminated by the heat treatment.

Example 7

A study was conducted to relate the pH of the concentrated waste sludge to the temperature needed to achieve irreversibility, as measured by insensitivity to overnight aging and shear. The material described in Example 1 was heat treated as in Example 1 except that in most cases the heat treatment was preceded by acidification by stirring in an appropriate amount of concentrated sulfuric acid and was followed by a neutralization to a pH value about 5.5 by stirring in an appropriate amount of lime slurry. The neutralized material was then heat treated for about fifteen minutes with 100 psig steam in an autoclave with a steam trap valve set at 100 psig. The neutralized material was then heat treated for about fifteen minutes with 100 psig steam in an autoclave with a steam trap valve set at 100 psig. The neutralized material reached a temperature of between 260 and 300°F in this fifteen minute period. The dewaterability was evaluated by filtration in accordance with the technique described in Example 1. The results were recorded in Table 5.

## TABLE 5

### A Correlation of Treatment Time to Treatment pH to Achieve Irreversibility

| Treatment pH | Treatment Time (in minutes) |
|---|---|
| 1[3] | 20 |
| 2 | 40 |
| 3 | 60 |
| 4 | 120 |
| 5 | 300 |

---

[3]projected value

### Examples 8 and 9

Pilot Plant Testing at a Municipal Treatment Plant

The sludge from a municipal waste treatment plant, a mixture of about one-half primary and one-half secondary sludge, was fed through the process and the resulting material was filtered on a 12.8 sq. ft., 4 chamber, diaphragm filter press. The material was adjusted to a pH of 2.5 - 3.0 in the plant with sulfuric acid and processed at 330°F and 100 psig with a 1 hour retention time (3 gpm initial feed) The material was then neutralized to a pH of 6.0 with lime slurry followed by a 15 minute retention time at 330°F. After the material was reduced in pressure and cooled to 120°F with cooling water, filtration was conducted by filtering at 60-80 psi followed by a diaphragm squeeze at 175 psi. The system employed is shown schematically in Fig. 1.

### Example 8

The total solids in the feed to the process was 16.8%. After processing the material at a 3 gpm flow at a temperature of 330°F through the pilot plant, and reducing the pressure through the let down tube, a filter cake of 67.8% total solids was produced. The resulting filter cake was 51% volatile solids on a dry basis with an ash content of 42.1% on a dry basis. This cake also had a BTU/LB value of 6,900 or 13,529 BTU/LB of volatiles on a dry basis.

### Example 9

The total solids in the feed to the process was 18.4%, with a 68% volatile solids content, on a dry basis, and an ash content of 29.1%, on a dry basis. This material also had a TKN (Total Kjeldahl Nitrogen) content of 9,800 Mg/Kg on an as is basis, and a total phosphate content of 3,400 Mg/Kg on an as is basis. After processing the material through the pilot plant at a 3 gpm flow, at a temperature of 330°F, and reducing the pressure through the let down tube, a filter cake of 66.3% total solids was produced. The resulting filter cake was 51% volatile solids on a dry basis. The filter cake had a BTU/LB value of 6,000 or 11,764 BTU/LB of volatiles on a dry basis. The resulting filtrate had a C.O.D. content of 23,000 mg/liter. This value equals 0.32 lbs. of C.O.D. per pound of total dry solids in the initial starting sludge. The ratio of BOD to COD was 0.43 for this material. Also, about 87% of the TKN was solubilized and 52% of the total phosphorous was solubilized.

The following table gives the metals concentration for the initial raw material, the filter cake, and the filtrate.

TABLE 6

|  | Initial Raw Material 18.4% Total Solids | Filter cake 66.3% Total Solids | Filtrate |
|---|---|---|---|
| Aluminum | 1,200 PPM | 6,900 PPM | 0.4 PPM |
| Arsenic | less than 5 | less than 5 | less than 0.4 |
| Barium | 72 | 30 | less than 0.1 |
| Beryllium | less than 0.2 | less than 0.2 | less than 0.01 |
| Cadmium | 1.5 | 7.3 | 0.050 |
| chromium | 62 | 280 | 0.30 |
| Copper | 52 | 240 | 0.038 |
| Iron | 2,800 | 13,000 | 6.6 |
| Lead | 10 | 49 | 0.02 |
| Mercury | 0.05 | 0.18 | less than 0.004 |
| Molybdenum | less than 10 | less than 10 | less than 0.6 |
| Nickel | 3.4 | 20 | 0.34 |
| Potassium | 280 | 250 | 92 |
| Selenium | less than 5 | less than 5 | less than 0.4 |
| Sulfate | --- | --- | 530 |
| Zinc | 73 | 343 | 0.124 |

The filtrate is very low in metals since the metals remain with the cake.

Example 10

The total solids feed to the process was 19.1%, with a 78% volatile solids content, on a dry basis, and an ash content of 21.0%, on a dry basis. This material had a TKN content of 7,700 Mg/Kg on an as is basis, and a total phosphate content of 2,800 Mg/Kg on an as is basis. After processing the material through the pilot plant at a 3 gpm flow, at a temperature of 330°F, a filter cake of 69.2% total solids was produced. (A 72 hour continuous run was conducted on the pilot plant.) The filter cake was 50% volatile solids on a dry basis with an ash content of 36.5% on a dry basis. The cake also had a BTU/LB value of 7,000 or 11,864 BTU/LB of volatiles on a dry basis. The filter cake had a density of 80.5 lbs./cubic foot. The filtrate had a C.O.D. value of 23,000 mg/liter. This value equals 0.34 lbs. of C.O.D. per lb. of total dry solids in the initial starting sludge. About 72% of the TKN was solubilized and 23% of the total phosphorous was solubilized.

Example 11

Incorporating Cement Kiln Dust as the Alkaline Agent

A sample of sludge from a Mid Atlantic municipal treatment facility, about one-half primary and one-half secondary, was treated using a process similar to the process of examples 1-6. The material was 23.8% total solids, and contained 75% volatile solids (dry weight basis). The Kjeldahl Nitrogen as N was 10,000 mg/kg on an as is basis.

To 3,000 gms of the material, 50 mls of 93% sulfuric acid (1.84 S.G.) was added, and the mixture was reacted in a laboratory pot at 330°F for 1 hour. After this period of time, 275 mls of 30% slurry of cement kiln dust was added. The cement kiln dust contained about 14.0% free alkalinity expressed as calcium hydroxide. The mixture was then subjected to 15 minutes reaction time at 330°F.

Upon filtration, a filter cake of about 65% solids was achieved using a diaphragm squeeze. The cake on a dry solids basis was 65% volatile solids, with a BTU value of 7,500 BTU/LB. The Kjeldahl Nitrogen as N was 17,000 mg/kg on an as is basis.

In terms of weight reduction, the 3,000 gms of starting material at 23.8% total solids produced about 670 gms of filter cake or about 23% of the original weight of the sludge.

For every pound of total solids, about 0.33 lbs. of C.O.D. appeared in the filtrate. This corresponds to a B.O.D. value of about 0.16 lbs. of B.O.D. per pound of total solids.

The results of an analysis done on the filtrate are as follows:

<u>Table 7</u>

| | |
|---|---|
| Ammonia as N | 1,600 mg/l |
| Nitrogen/Kjeldahl/as N | 3,100 mg/l |
| Phosphate/Total/as P | 230 mg/l |
| Sulfate | 6,500 mg/l |
| | |
| Aluminum | 12 mg/l |
| Cadmium | 0.054 mg/l |
| Chromium | 2.4 mg/l |
| Copper | 0.272 mg/l |
| Iron | 730 mg/l |
| Nickel | 1.02 mg/l |
| Zinc | 2.9 mg/l |
| Lead | 0.54 mg/l |

Examples 12 and 13

Treatment of Biological Sludge From A Paper Plant And An Oil Refinery Processed In the Lab Using a Process of the Invention

Example 12

A sample of a biological sludge from a Northeastern Paper Plant was processed in the lab using a process of the invention similar to those of examples 1-6. The material was initially 18.7% total dry solids with an ash of 16.3% on a dry basis. Four hundred grams of the material was adjusted to a pH of 3.0 with sulfuric acid. About 9.2 grams as 94% sulfuric acid was required. The material was then subjected to 80 minutes at 330° F in a laboratory autoclave. Following this period of time, 10 mls of a 10% lime slurry was added to the material and it was subjected to 15 minutes additional time at 330°F. Fifty gram increments of the material were cooled and filtered on a laboratory bomb filter at 100 psi followed by a diaphragm squeeze at 175 psi. This material filtered quickly in less than one minute to yield a cake of 55.0% solids with an ash of 26.2% solids on a dry basis and a 7,700 BTU/LB value on a dry basis. The processed material was aged overnight and filtered in less than 1 minute. Therefore, the aged material did not regress on the lab filter in terms of filtration.

The filter cake represented about 25% of the weight of the initial starting material, so a 75% weight reduction of disposable material occurred. The COD of the filtrate was 9,000 mg/liter and the 5 day BOD value was 4,500 mg/liter. About 73% of the TKN (Total Kjeldahl Nitrogen) was solubilized and about 43% of the Total Phosphorous was solubilized.

The following table (Table 8) relates some metals concentrations of the initial raw material, the filter cake, and the filtrate.

TABLE 8

|  | Initial Raw Material | Filter Cake | Filtrate |
|---|---|---|---|
| Aluminum | 740 PPM | 2,800 | 1 |
| Cadmium | 1.5 | 5.6 | 0.018 |
| Chromium | 5 | 13 | 0.3 |
| Copper | 11 | 34 | 0.025 |
| Iron | 450 | 3,200 | 5.1 |
| Lead | less than 10 | 20 | 0.2 |
| Nickel | 4 | 13 | 0.61 |
| zinc | 65 | 220 | 0.32 |

Example 13

A sample of a biological sludge from an Eastern Oil Refinery was processed in the lab using a process of the invention similar to those of examples 1-6. The material received was 13.8% total dry solids. Four hundred grams of the material was adjusted to a pH of 3.0 with 3.7 gms of 94% sulfuric acid. The material was then processed for 80 minutes at 330°F in a laboratory autoclave. Following this period of time 4 mls of a 10% lime slurry was added to the material and it was subjected to 15 minutes additional time at 330°F. One hundred gram increments of the material were cooled and filtered on a laboratory bomb filter at 100 psi following by a diaphragm squeeze at 175 psi. This material filtered in eight minutes to yield a cake of 41.0% solids having a BTU value of 11,200 on a dry basis. The filter represented about 19% of the weight of the initial starting cake, so a weight reduction in excess of 80% was achieved.

Based upon the BTU value of the cake, 11,200 BTU/LB on a dry basis, it is apparent that the biological sludge contained a high concentration of oil.

Examples 14 - 16

Using a Process of the Invention Without Alkaline Neutralization

Example 14

A sample of sludge from a Mid Atlantic municipal treatment facility, about one-half primary and one-half secondary, was treated using a process of the invention similar to examples 1-6. The material was 21.5% total solids, and the Kjeldahl Nitrogen as N was 5,800 mg/kg on an as is basis. The total phosphate as P was 1,900 mg/kg on an as is basis.

To 3,000 gms of the material, 58 mls of 93% sulfuric acid (1.84 S.G.) was added, and the mixture was reacted in a laboratory pot at 338°F for 1 hour. The initial pH of the mixture was 1.9, and the final pH of the mixture after the reaction time was 3.0.

Upon filtration, a filter cake of about 71% solids was achieved using a diaphragm squeeze at 175 psi. The mixture filtered quickly in less than 3 minutes on a laboratory filter at 100 psi. The Kjeldahl Nitrogen as N of the filter cake was 4,600 mg/kg on an as is basis. The total phosphate as P of the filter cake was 5,000 mg/kg on an as is basis. The ash, on a dry solids basis, of the filter cake was about 40%, and the BTU value, on a dry solids basis, was 7,200 BTU/pound.

For every pound of total solids, about 0.21 lbs of C.O.D. appeared in the filtrate. This corresponds to a B.O.D. value of about 0.12 lbs of B.O.D. per pound of total solids. Also, the filtrate had a Kjeldahl Nitrogen as N of 3,400 mg/l, and a total phosphate as P of 1,000 mg/l.

In terms of weight reduction, the 3,000 gms of starting material at 21.5% total solids produced about 685 gms of filter cake or about 23% of the original weight of the sludge.

The following table (Table 9) relates some metal concentrations of the initial material, the filter cake, and the filtrate:

Table 9

|  | Initial Sludge at 21.5% Total Solids | Filter Cake at 71.0% Total Solids | Filtrate |
|---|---|---|---|
| Aluminum | 1,300 mg/kg | 3,900 mg/kg | 480 mg/l |
| Arsenic | < 5 | < 5 | < 0.4 |
| Barium | 35 | 39 | < 0.1 |
| Beryllium | < 0.2 | < 0.2 | < 0.01 |
| Cadmium | 1.2 | 2.6 | 0.476 |
| Chromium | 46 | 120 | 18 |
| Copper | 52 | 274 | 0.202 |
| Iron | 3,100 | 6,200 | 2,600 |
| Lead | 19 | 74 | 1.7 |
| Mercury | 0.13 | 0.68 | 0.004 |
| Molybdenum | < 10 | < 10 | < 0.6 |
| Nickel | 4.2 | 14 | 3.4 |
| Potassium | 280 | 240 | 140 |
| Selenium | < 5 | < 5 | < 0.4 |
| Sulfate | --- | --- | 13,500 |
| Zinc | 83 | 123 | 54 |

Example 15

To 3,000 gms of the same sludge as in example 14, 21.5% total solids, 75 mls of 93% sulfuric acid (1.84 S.G.) was added, and the mixture was reacted in a laboratory pot at 338°F for 1 hour. The initial pH of the mixture was 0.80, and the final pH of the mixture after the reaction time was 1.96.

Upon filtration, a filter cake of about 70% solids was achieved using a diaphragm squeeze at 175 psi. The mixture filtered quickly in less than 5 minutes on a laboratory filter at 100 psi. The Kjeldahl Nitrogen as N of the filter cake was 4,500 mg/kg on an as is basis. The total phosphate as P of the filter cake was 1,600 mg/kg on an as is basis. The percent volatiles of the filter cake, on a dry solids basis, was 50.0%.

For every pound of total solids, about 0.23 lbs. of C.O.D. appeared in the filtrate. This corresponds to a B.O.D. value of about 0.12 lbs of B.O.D. per pound of total solids.

Also, the filtrate had a Kjeldahl Nitrogen as N of 2,300 mg/l, and a total phosphate as P of 1,200 mg/l.

In terms of weight reduction, the 3,000 gms of starting material at 21.5% total solids produced about 504 gms of filter cake or about 17% of the original weight of the sludge.

Table 10 relates some metal concentrations of the initial material, the filter cake, and the filtrate:

17

Table 9

|  | Initial Sludge at 21.5% Total Solids | Filter Cake at 71.0% Total Solids | Filtrate |
|---|---|---|---|
| Aluminum | 1,300 mg/kg | 1,700 mg/kg | 670 mg/l |
| Arsenic | < 5 | < 5 | < 0.4 |
| Barium | 35 | 26 | < 0.1 |
| Beryllium | < 0.2 | < 0.2 | < 0.01 |
| Cadmium | 1.2 | 1.8 | 0.502 |
| Chromium | 46 | 120 | 32 |
| Copper | 52 | 510 | 0.242 |
| Iron | 3,100 | 4,000 | 3,200 |
| Lead | 19 | 79 | 1.9 |
| Mercury | 0.13 | 0.14 | 0.035 |
| Molybdenum | < 10 | < 10 | < 0.6 |
| Nickel | 4.2 | 28 | 9.2 |
| Potassium | 280 | 210 | 130 |
| Selenium | < 5 | < 5 | < 0.4 |
| Sulfate | --- | --- | 17,200 |
| Zinc | 83 | 136 | 52 |

Example 16

A sample of sludge from a Mid Atlantic municipal treatment facility, about one-half primary and one-half secondary, was treated using a process of the invention similar to those of examples 1-6. The material was 27.5% total solids, and the Kjeldahl Nitrogen as N was 12,000 mg/kg on an as is basis. The total phosphate as P was 3,300 mg/kg on an as is basis. The volatile solids, on a dry solids basis, were 77%.

To 3,000 gms of the material, 50 mls of 93% sulfuric acid (1.84 S.G.) was added, and the mixture was reacted in a laboratory pot at 330°F for 1 hour. The initial pH of the mixture was 2.8, and the final pH of the mixture after the reaction time was 4.0.

Upon filtration, a filter cake of about 63% solids was achieved using a diaphragm squeeze at 175 psi. The mixture filtered quickly in less than 5 minutes on a laboratory filter at 100 psi. The Kjeldahl Nitrogen as N of the filter cake was 12,000 mg/kg on an as is basis. The total phosphate as P of the filter cake was 4,600 mg/kg on an as is basis. The volatile solids, on a dry solids basis, of the filter cake was 73%.

For every pound of total solids, about 0.36 lbs of C.O.D. appeared in the filtrate. This corresponds to a B.O.D. value of about 0.18 lbs of B.O.D. per pound of total solids. Also, the filtrate had a Kjeldahl Nitrogen as N of 4,400 mg/l, and the total phosphate as P of 560 mg/l.

In terms of weight reduction, the 3,000 gms of starting material at 27.% total solids produced about 770 gms of filter cake or about 25% of the original weight of the sludge.

The following table relates some metal concentrations on the initial material, the filter cake, and the filtrate.

Table 11

|  | Initial Sludge at 27.5% Total Solids | Filter Cake at 63.0% Total Solids | Filtrate |
|---|---|---|---|
| Aluminum | 2,400 mg/kg | 6,000 mg/kg | 26 mg/l |
| Cadmium | 2.3 | 5.1 | 0.096 |
| Chromium | 130 | 270 | 6.2 |
| Copper | 91 | 210 | 0.496 |
| Iron | 3,400 | 6,000 | 1,400 |
| Lead | 30 | 60 | 0.60 |
| Nickel | 3.9 | 8.1 | 0.80 |
| Sulfate | --- | --- | 8,400 |
| Zinc | 150 | 310 | 14 |

Example 17

Using a Process of the Invention for Pathogen Destruction

A sample of an anaerobically digested sludge from a Mid-Atlantic municipal treatment facility was treated using the process of the invention similar to examples 1-6. The digested sludge was 15.0% total solids, and contained 70% volatile solids (dry weight basis). The Kjeldahl Nitrogen as N was 8,300 mg/kg on an as is basis, and also contained a total phosphate concentration as P of 3,000 mg/kg on an as is basis.

To 3,000 gms of the material, 55 mls. of 93% sulfuric acid (1.84 S.G.) was added, and the mixture was reacted in a laboratory pot at 330°F for 1 hour. After this period of time, 370 mls. of a 10% calcium hydroxide was added, and the mixture was then subjected to 15 minutes of reaction time at 330°F.

Upon filtration, a filter cake of about 50.0% solids was achieved using a diaphragm squeeze. The cake was 58% volatile solids (dry weight basis), with a BTU content of 6,300 BTU/LB. The Kjeldahl Nitrogen as N was 13,000 mg/kg on an as is basis, and also contained a total phosphate concentration as P of 6,700 mg/kg on an as is basis.

In terms of weight reduction, the 3,000 grams of starting material at 15% solids produced about 570 gms of filter cake or 19% of the original weight of the sludge.

For every pound of total solids, about 0.32 lbs. of C.O.D. appeared in the filtrate. This value corresponds to a B.O.D. weight of about 0.16 lbs. of B.O.D. per pound of total solids.

A pathogen analysis was done on the starting material, on the filter cake, and on the filter cake after 4.0% (by weight) of calcium hydroxide was added to the filter cake (See Table 12) These data indicate that the sludge meets PFRP criteria for proposed class A sludge with respect to pathogens.

## Table 12

| | | Anaerobically Digested | Sludge PORI Treatment Before Liming | PORI Treatment with Liming to pH = 12 |
|---|---|---|---|---|
| A. | **Bacteria** (MPN/gram of SS) | | | |
| | Fecal Streptococci | $4.5 \times 10^2$ | 0.2 | 0.1 |
| | Fecal Coliform | 10.0 | < 0.04* | < 0.04* |
| | Salmonella | 6.0 | < 0.04* | < 0.04* |
| B. | **Eneric Viruses** (MPN-1U/100 grams of SS) | < 6.0 | < 5* | < 2* |
| C. | **Parasite Eggs** (# Viable Eggs/Kg of SS) | | | |
| | Ascaris eggs | 1,580 | < 70* | < 60* |
| | Toxacara eggs | 680 | < 70* | < 60* |

COMMENTS: The sludge meets PFRP criteria or Proposed 503 Class A Sludge with respect to pathogens.

*Below detection limit

The foregoing examples also illustrate utilities of the products produced by the process of the invention. Illustrative of the utilities of the materials which result from the processes of the invention are: incineration, land fill, composting, fertilizer, soil amendment, top soil manufacturing, soil conditioning, interim land cover, fuel, land and mine reclamation and construction materials. For example, the filter cakes which result from the processes of this invention have a high BTU/LB value. These BTU/LB values are high enough so that the materials which result from the process of the invention can be employed as fuels. Workers of ordinary skill will readily be able to optimize process conditions for fuel production.

Granular materials which can result from processes of this invention can be employed in soil treatment and in farming and agriculture such as fertilizers and other soil treatment materials such as farming aids. In such instances, the filter cake resulting from the process is ground up using conventional equipment, e. g., a turbulator or similar grinder. Lime can be added or cement kiln dust or other additives can be added as desired. The material, after being ground, can also be pelletized using a disk pelletizer or an extruder.

The soil treatment additive can be customized as above. For instance, when it is desired to raise the pH of the soil in a particular region, the material resulting from the process of the invention can have mixed with it, lime, cement kiln dust, etc. If it is desired to employ the soil treatment agent, e.g., in Florida where there is little organic matter in the soil and no need to alkalize the soil, no alkaline treatment may be needed. Nitrites or nitrates, such as sodium nitrite can also be added.

The criteria which are satisfied by the processes of this invention include stabilization and disinfection. The criteria for PFRP include the reduction of pathogens to below detectable levels; i.e, less than one PFU (plaque forming unit) for viruses, 3 CFR (count forming unit) for bacteria and one viable helminth egg per 100 ml of sludge. These levels can be achieved by the processes of this invention.

## Claims

1. A process for enhancing the dewaterability of concentrated waste sludges which haven a substantial content of a water-retaining cellular structure arising from microbiological action comprising:

   1) adjusting the pH of said sludge to a value of 4 or less;

   2) heat treating said sludge without the addition of an oxygen-bearing gas or oxidizing agent at a temperature between about 260°F and 390°F for a sufficient time to maintain its enhanced filterability,

   3) readjusting the pH of said sludge to within about 2 points of neutral and heat treating this neutralized or partially neutralized sludge at a temperature between about 260 and 390°F for a sufficient time to maintain its enhanced filterability.

2. The process of claim 1 wherein the time at temperature is sufficient that a fifty gram sample of the concentrated waste sludge when mixed with an equal weight of water can be filtered at 140°F

   a) to solids content in excess of about 55 weight percent;

   b) in less about 30 minutes;

   using a recessed chamber membrane pressure filter with filtration pressure of 100 psi and a squeeze pressure of 175 psi.

3. The process of claim 1 wherein the concentrated waste sludge is subjected to a temperature between about 270°F and 390°F by direct contact with pressurized steam.

4. The process of claim 3 wherein the steam is injected into the body of the concentrated waste sludge to bring it up to the treatment temperature.

5. The process of claim 3 wherein the time at temperature is sufficient that the dewaterability of the concentrated waste sludge is not significantly effected by subjecting the heat treated material to substantial shear.

6. The process of claim 1 wherein the sludge is heat treated as a unitary mass.

7. The process of claim 1 wherein the pH readjusting is effected with an ionic calcium compound.

8. The process of claim 7 wherein the pH readjusting is effected with cement kiln dust.

9. The process of claim 7 wherein the pH readjustment is effected with calcium hydroxide.

10. The process of claim 1 wherein pathogens present in said sludge are rendered essentially inactive.

11. A process of claim 1 wherein the resultant sludge contains less than about 1 PFU, less than about 3 CFR and no more than one viable helminth egg per about 100 ml of sludge.

12. A process of dewatering relatively high solids content waste sludges while minimizing the COD and BOD load of the resultant effluent, said sludges having a substantial content of a water retaining cellular structure arising from microbiological action which does not permit significant further dewatering by a simple room temperature filtration on a recessed chamber filter at a filtration pressure of 100 psi, comprising the steps of:

    1) adjusting the pH of said sludge to a value of less than about 4;

    2) heat treating the acidified sludge at a temperature between about 290°F and 370°F by direct contact with pressurized steam for a period between about 15 minutes and three hours sufficient that the ultimate dewaterability of the concentrated waste sludge is not significantly effected by subjecting the heat treated neutralized material to substantial shear;

    3) neutralizing the heat treated sludge to a pH greater than about 5 with a basic calcium compound;

    4) heat treating the neutralized sludge at a temperature of at least about 260°F in excess of about 5 minutes; and

    5) filtering the heat treated neutralized sludge to a water content of less than about 55 weight percent in less than about two hours.

13. The process of claim 1 wherein the minimum heat treatment time and the pH of the concentrated waste sludge are correlated in accordance with the formula $y = bm^x$ wherein $y$ is the treatment time in minutes, $x$ is the pH of the sludge during heat treatment, $b$ is 9.986 and $m$ is 1.894.

14. A process for enhancing the dewaterability of concentrated waste sludges which have a substantial content of a water-retaining cellular structure arising from microbiological action comprising:
    1) adjusting the pH of said sludge to a value of 4 or less; and
    2) heat treating said sludge without the addition of an oxygen-bearing gas or oxidizing agent at a temperature between about 260°F and 390°F for a sufficient time to maintain its enhanced filterability.

15. The process of claim 14 wherein the time at temperature is sufficient that a fifty gram sample of the concentrated waste sludge when mixed with an equal weight of water can be filtered at 140°F
    a) to solids content in excess of about 55 weight percent;
    b) in less about 30 minutes;
        using a recessed chamber membrane pressure filter with filtration pressure of 100 psi and a squeeze pressure of 175 psi.

16. The process of claim 14 wherein the concentrated waste sludge is subjected to a temperature between about 270°F and 390°F by direct contact with pressurized steam.

17. The process of claim 14 wherein the steam is injected into the body of the concentrated waste sludge to bring it up to the treatment temperature.

18. The process of claim 14 wherein the time at temperature is sufficient that the dewaterability of the concentrated waste sludge is not significantly effected by subjecting the heat treated material to substantial shear.

19. The process of claim 14 wherein the sludge is heat treated as a unitary mass.

20. The process of claim 14 wherein pathogens present in said sludge are rendered essentially inactive.

21. A process of claim 14 wherein the resultant sludge contains less than about 1 PFU, less than about 3 CFR and no more than one viable helminth egg per about 100 ml of sludge.

22. The process of claim 1 wherein the solid content of said concentrated waste sludges is in the range of from about 7% to about 15%.

23. The process of claim 1 wherein the solid content of said concentrated waste sludges is greater than about 15%.

24. The process of claim 12 wherein the solid content of said waste sludges is in the range of from about 7% to about 15%.

25. The process of claim 12 wherein the solid content of said waste sludges is greater than about 15%.

26. The process of claim 14 wherein the solid content of said waste sludges is in the range of from about 7% to about 15%.

27. The process of claim 14 wherein the solid content of said waste sludges is greater than about 15%.

Fig. 1

European Patent Office

**EUROPEAN SEARCH REPORT**

Application Number

EP 92 30 9042

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 189 155 (THE DOW CHEMICAL COMPANY)<br><br>* page 5, line 5 - page 7, line 5 *<br>* page 8, line 5 - line 8 *<br>* page 8, line 19 - line 22 *<br>* page 8, line 26 - page 9, line 2 *<br>* page 10, line 9 - page 11, line 31 *<br>--- | 1,3-7,<br>10-12,<br>14,<br>16-22,<br>24,26 | C02F11/18<br>C02F11/12 |
| X | FR-A-2 588 549 (ENSO-GUTZEIT OY)<br>* page 10; claims 1,3,4 *<br>* page 7, line 8 - page 8, line 2 *<br>--- | 14,16-21 | |
| A | US-A-3 289 845 (CIBA LIMITED)<br>* column 1, line 57 - column 2, line 14 *<br>* column 3; claim *<br>--- | 2,12 | |
| P,X | EP-A-0 460 814 (PORI INTERNATIONAL)<br><br>* page 15; claims 25-34 *<br>--- | 1-7,9,<br>12,13 | TECHNICAL FIELDS SEARCHED (Int. Cl.5) |
| A | JOURNAL OF THE WATER POLLUTION CONTROL FEDERATION<br>vol. 54, no. 2, February 1982, WASHINGTON US<br>pages 146 - 152<br>G. MICHAEL ALSOP ET AL. 'IMPROVED THERMAL SLUDGE CONDITIONING BY TREATMENT WITH ACID AND BASES'<br>* the whole document *<br><br>----- | 1,2 | C02F |

The present search report has been drawn up for all claims

| Place of search | Date of completion of the search | Examiner |
|---|---|---|
| THE HAGUE | 18 JANUARY 1993 | TEPLY J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)